# EUROPEAN PATENT SPECIFICATION

(11) **EP 2 111 422 B1**
(45) Date of publication and mention of the grant of the patent: **22.12.2010**
(21) Application number: 08702339.6
(22) Date of filing: 28.01.2008
(51) Int. Cl.: C08G 18/40, C08G 18/80, C08G 18/42, C08G 18/62, C09D 175/04

(54) **PAINT COMPOSITIONS**
FARBZUSAMMENSETZUNGEN
COMPOSITIONS POUR PEINTURES

(30) Priority: 16.02.2007 JP 2007036573
(43) Date of publication of application: 28.10.2009
(73) Proprietor: BASF Coatings Japan Ltd., Totsuka-ku Yokohama 244-0815 (JP)
(72) Inventor: OHSUKA, Akihiro, Yokohama-shi Kanagawa 244-0815 (JP); YAGI, Shinji, Ako shi Hyogo 678-0249 (JP); YAMAMOTO, Toshio, Yokohama 234-0051 (JP)
(74) Representative: Leifert & Steffan
(86) International application number: PCT/IB2008/000204
(87) International publication number: WO 2008/099247

(56) References cited:
- EP-A- 1 669 426

## Description

### [Technical Field]

The present invention concerns novel top-coat paint compositions for pre-coating purposes. More precisely, the invention concerns top-coat paint compositions for pre-coating purposes which can be used indoors on partitions and dividers and the like with which paint films which do not generate harmful substances such as formaldehyde are obtained, which have excellent workability and which also have excellent staining resistance in respect of oil-based ink staining and carbon staining for example.

### [Background Technology]

The technique of obtaining a high level of workability with a high polyester resin and obtaining staining resistance by using a concentration of melamine resin at the paint film surface is known as a method of achieving both workability and staining resistance on pre-coated steel sheets for indoor use (for example, seen Patent Citation 1). However, since a melamine resin is used the "sick-house" problem in that harmful substances such as formaldehyde are generated by the paint film arise.

Paint compositions which include acrylic modified polyester resins of number average molecular weight from 2,000 to 30,000 and hydroxyl group value from 3 to 150 mgKOH/g and polyisocyanate compounds or amino resins as hardening agents are known as paint compositions for forming paint films which provide a high paint film hardness and excellent staining resistance and which also have excellent flexibility for workability, impact resistance and the like (for example, see Patent Citation 2). However, although there is no problem with the oil-based ink staining properties with these paint compositions, the crosslink density is low and so there is a weakness in that the properties with regard to staining with carbon suspended in water are inadequate.

Resin compositions for paint purposes where an acrylic resin which includes N-methylol (meth)acrylamide and/or. N-alkoxymethyl (meth)acrylamide or mono-substituted derivatives of these materials as essential components is compounded as a crosslinking agent in a high molecular weight polyester resin are known as resin compositions for paint purposes which have a good high degree of workability when used for pre-coated steel sheets and with which the paint film hardness, staining resistance, solvent resistance and resistance to chemical attack are all excellent (for example see Patent Citation 3). However, with these paint compositions a high molecular weight polyester resin is essential for maintaining the workability and so the staining resistance (and especially the carbon staining resistance) is unsatisfactory, and in addition to this a large amount of diluting solvent is also required and flaws develop on coating thick films and since the solid fraction is low there is a difficulty in that a satisfactory film thickness cannot be obtained.

Furthermore, paint compositions which have as the main components a resin component comprising a polyester compound which has repeating units based on the reaction product of hydrogenated terephthalic acid and a glycol which has not more than 10 carbon atoms, a polyol which is an acrylic resin of number average molecular weight from 1,500 to 12,000 which has at least two hydroxyl groups in one molecule and/or a polyester resin of number average molecular weight from 1,000 to 8,000 which has two or more hydroxyl groups in one molecule, and an isocyanate compound are known as paint compositions for pre-coated steel sheet purposes when both the workability and hardness of the paint film are satisfied to a high degree even with a comparatively thin sheet thickness, and which also have excellent staining resistance (for example, see Patent Citation 4). However, with these paint compositions a low molecular weight linear chain (linear structure) type polyester which includes alicyclic compounds is an essential component and so the balance between hardness and workability is not satisfactory and, furthermore, there is another weakness in that the staining resistance is also unsatisfactory.

[Patent Citation 1]
   Japanese Unexamined Patent Application Laid Open H7-331167
[Patent Citation 2]
   Japanese Unexamined Patent Application Laid Open H7-090221
[Patent Citation 3]
   Japanese Unexamined Patent Application Laid Open H7-113057
[Patent Citation 4]
   Japanese Unexamined Patent Application Laid Open H10-324844

Document EP-A-1 669 426 discloses a top-coat paint composition (see example 1-7 and 16 of EP-A-1 669 426) containing two polyesterpolyol resins, an acrylic resin (B-1) having hydroxyl groups and a blocked polyisocyanate as a crosslinking agent.

### [Disclosure of the Invention]

### [Problems to be Resolved by the Invention]

In general, urethane crosslinking which comprises the reaction of isocyanate compounds with hydroxyl groups is based on an equimolar reaction of hydroxyl groups and isocyanate groups and so a uniformly crosslinked paint film is formed and in respect of resistance oily ink staining and carbon staining it
tends to be unsatisfactory when compared with crosslinking with an amino resin. Hence it is necessary to realize staining resistance by means of the crosslink density, but if the crosslink density of the paint film is increased then the paint film becomes harder and the workability is reduced and so it is thought to be difficult to achieve both workability and staining resistance.
The present invention is intended to provide top-coat paint compositions with which, even when coated on pre-coated steel sheets for indoor purposes, in particular the paint film does not generate harmful substances such as formaldehyde and with which paint films which have excellent workability and staining resistance can be formed.

### [Means of Resolving These Problems]

As a result of thorough research carried out with a view to resolving the abovementioned problems, the inventors have set as basic design features not using an amino resin for the crosslinking agent so that no harmful substances are produced by the paint film and combining workability originating from a polyester resin and staining resistance originating from an acrylic resin. However, in fact these two types of resin have different basic structures and are therefore incompatible and there is a problem in that the paint separates, and in order to overcome this problem the design was set in such a way that the property values of the two resins were set within specified ranges, and it was also discovered that by using a specified polyester resin in a specified proportion as a third basic resin the compatibility problem was resolved and it was possible to form paint films which have both excellent workability and excellent staining resistance, and the invention is based upon this discovery.

That is to say, the present invention provides a top-coat paint composition for pre-coating purposes which is characterized in that it includes (A) polyester resin of which the hydroxyl group value is from 10 to 35 mgKOH/g, the acid value is not more than 15 mgKOH/g and the number average molecular weight is from 2,000 to 6,000, (B) acrylic resin of which the hydroxyl group value is from 50 to 150 mgKOH/g, the amine value is from 10 to 50 mgKOH/g, the number average molecular weight is from 1,500 to 8,000 and the glass transition temperature is from 0 to 50°C, and (C) polyester resin of which the hydroxyl group value is from 50 to 150 mgKOH/g, the acid value is not more than 20 mgKOH/g and the number average molecular weight is from 1,000 to 4,000, and in that the solid fraction proportions as the base resin of each component are from 45 to 80 mass% of the (A) component, from 10 to 40 mass% of the (B) component and from 5 to 30 mass% of the (C) component, and which also includes (D) blocked polyisocyanate as a crosslinking agent which reacts with hydroxyl groups and the ratio of the number of mol of isocyanate group of the (D) component blocked polyisocyanate compound as the crosslinking agent and the total number of mol of hydroxyl group in the (A), (B) and (C) components as the base resin is from 1/0.7 to 1/1.3.

### [Effect of the Invention]

The top-coat paints for pre-coating purposes of this invention can provide paint films which do not generate harmful substances and which have excellent workability and staining resistance. Because of this excellent paint film performance they are ideal in applications as paints for the coated steel sheets which are used indoors as partitions and dividers for example.

### [Embodiment of the Invention]

The invention is a top-coat paint composition for pre-coating purposes which includes the (A) component polyester resin, the (B) component acrylic resin and the (C) component polyester resin which are hydroxyl group containing resins, and the (D) component blocked polyisocyanate compound which is a crosslinking agent which reacts with hydroxyl groups.
The (A) component polyester resin of this invention is the component which imparts flexibility to the paint film and it also fulfills the role of heightening the workability of the paint film.
The hydroxyl group value of the (A) component polyester resin is from 10 to 35 mgKOH/g, and most desirably from 15 to 30 mgKOH/g. If the hydroxyl group value is less than 10 mgKOH/g then the hardenability is inadequate, and in those cases where it exceeds 35 mgKOH/g the workability is unsatisfactory.
Furthermore, the acid value of the (A) component polyester resin is not more than 15 mgKOH/g, and most desirably not more than 8 mgKOH/g. In those cases where the acid value exceeds 15 mgKOH/g the stability of the paint is inadequate.

Furthermore, the number average molecular weight of the (A) component polyester resin is from 2,000 to 6,000, and most desirably from 3,000 to 5,000. In those cases where the number average molecular weight is less than 2,000 the solvent resistance is inadequate and in those cases where it exceeds 6,000 the compatibility with the other resin components is inadequate.
The (A) component polyester resin which is used in a paint composition of this invention can be obtained using a known method such as the direct esterification method, the ester exchange method or the ring-opening polymerization method.

In those cases where the (A) component polyester resins are synthesized with the direct esterification method by means of the polycondensation of polybasic carboxylic acids and polyhydric alcohols, the polybasic carboxylic acids may be, for example, di-basic acids such as phthalic acid, isophthalic acid, terephthalic acid, succinic acid, adipic acid, sebacic acid, maleic acid, fumaric acid, tetrahydrophthalic acid and hexahydrophthalic acid or the anhydrides of such acids, or carboxylic acids which have three or more carboxyl groups such as trimellitic acid and pyromellitic acid and the anhydrides of such acids. Furthermore, the polyhydric alcohols may be diols such as ethylene glycol, propylene glycol, diethylene glycol, butanediol, neopentyl glycol, 1,4-hexanediol, 1,6-hexanediol and cyclohexanedimethylol or polyhydric alcohols which have three or more hydroxyl groups such as glycerine, trimethylolethane, trimethylolpropane, pentaerythritol or the like.

The (A) component polyester resin can also be obtained by means of polycondensation with ester exchange between a lower alkyl ester of a polybasic carboxylic acid and a polyhydric alcohol. Moreover, the polyester resins which are used in the paint compositions of this invention can also be obtained by the ring-opening polymerization of lactones such as β-propiolactone, δ-valerolactone and ε-caprolactone.
Polyesters which have a linear structure in which there is little tri-functional monomer are ideal for realizing the resin property values of the (A) component polyester resin.

The (C) component polyester resin of this invention improves the compatibility of the (B) component acrylic resin described hereinafter with the abovementioned (A) component polyester resin and fulfills the role of heightening the crosslink density. The hydroxyl group value of the (C) component polyester resin is from 50 to 150 mgKOH/g, and most desirably from 80 to 120 mgKOH/g. If the hydroxyl group value is less than 50 mgKOH/g then the solvent resistance is inadequate, and in those cases where it exceeds 150 mgKOH/g the workability is inadequate.
Furthermore, the acid value of the (C) component polyester resin is not more than 20 mgKOH/g, and preferably not more than 12 mgKOH/g. The stability of the paint is unsatisfactory in those cases where the acid value exceeds 20 mgKOH/g.

Furthermore, the number average molecular weight of the (C) component polyester resin is from 1,000 to 4,000, and most desirably from 1,500 to 3,500. In those cases where the number average molecular weight is less than 1,000 the solvent resistance is inadequate, and in those cases where it exceeds 4,000 the compatibility with the other resin components is inadequate. The (C) component polyester resin which is used in a paint composition of this invention can be obtained with the same methods as the (A) component polyester resin, but a polyester which has a network structure in which tri-functional monomers have been used is ideal for achieving the resin characteristic values of the (C) component polyester resin.

The (B) component acrylic resin of this invention heightens the crosslink density and imparts hardness and it also fulfills the role of heightening the staining resistance.
The hydroxyl group value of the (B) component acrylic resin is from 50 to 150 mgKOH/g, and most desirably from 80 to 120 mgKOH/g. If the hydroxyl group value is less than 50 mgKOH/g then the staining resistance is inadequate, and in those cases where it exceeds 150 mgKOH/g the workability is inadequate. The inclusion of amine as a functional group in the (B) component acrylic resin is desirable. The preferred amine value of the resin is from 10 to 50 mgKOH/g, and most desirably from 20 to 40 mgKOH/g. If the amine value is less than 10 mgKOH/g then the staining resistance is inadequate, and in those cases where it exceeds 50 mgKOH/g the stability of the paint is inadequate.

Furthermore, the number average molecular weight of the (B) component acrylic resin is from 1,500 to 8,000, and most desirably from 3,000 to 6,000. In those cases where the number average molecular weight is less than 1,500 the staining resistance is inadequate, and in those cases where it exceeds 8,000 the compatibility with the other resin components is inadequate.
Moreover, the glass transition temperature (Tg) of the (B) component is preferably from 0 to 50°C, and most desirably from 15 to 35°C. In those cases where the glass transition temperature is lower than 0°C the staining resistance is inadequate, and in those cases where it is higher than 50°C the workability is inadequate. Moreover, measurement of the glass transition temperature is carried out with the DSC (differential scanning calorimeter) method after removing the solvent component from the resin under reduced pressure.

The (B) component acrylic resin which is used in a paint composition of this invention can be produced using a known method such as the radical polymerization method for example.
Actual examples of the methods for the production of the (B) component acrylic resin include that where the component is produced by the radical copolymerization of copolymerizable radically polymerizable monomer which includes amine as a functional group, copolymerizable radically polymerizable monomer which includes hydroxyl group and other copolymerizable radically polymerizable monomer.

Actual examples of copolymerizable radically copolymerizable monomers which include amine as a functional group include dimethylaminoethyl (meth)acrylate, diethylaminoethyl (meth)acrylate, dimethylaminopropyl (meth)acrylate and N,N-dimethyl-aminopropylacrylamide.
However, although the radically polymerizable monomers which include an amide group such as acrylamide and methacrylamide for example have an amine value, their use is undesirable since they have no effect on the staining resistance.

Actual examples of the copolymerizable radically polymerizable monomers which have hydroxyl groups include 2-hydroxyethyl acrylate, 2-hydroxypropyl acrylate, 3-hydroxypropyl acrylate, 4-hydroxybutyl acrylate, 2-hydroxyethyl methacrylate, 2-hydroxypropyl methacrylate, 3-hydroxypropyl methacrylate, 4-hydroxybutyl methacrylate, allyl alcohol, acrylic acid and versatic acid glycidyl ester adduct, methacrylic acid and versatic acid glycidyl ester adduct, and the ethylene oxide and/or propylene oxide adducts of (meth)acrylic acid hydroxyalkyl esters such as 2-hydroxyethyl acrylate, 2-hydroxypropyl acrylate, 3-hydroxypropyl acrylate, 4-hydroxybutyl acrylate, 2-hydroxyethyl methacrylate, 2-hydroxypropyl methacrylate, 3-hydroxypropyl methacrylate, 4-hydroxybutyl methacrylate and the like. One type of radically polymerizable monomer which has a hydroxyl group can be used, or a combination of two or more type can be used.

Actual examples of other copolymerizable radically polymerizable monomers include methyl acrylate, ethyl acrylate, n-propyl acrylate, isopropyl acrylate, n-butyl acrylate, isobutyl acrylate, sec-butyl acrylate, hexyl acrylate, cyclohexyl acrylate, 2-ethylhexyl acrylate, octyl acrylate, lauryl acrylate, stearyl acrylate, methyl methacrylate, ethyl methacrylate, n-propyl methacrylate, isopropyl methacrylate, n-butyl methacrylate, isobutyl methacrylate, sec-butyl methacrylate, hexyl methacrylate, cyclohexyl methacrylate, 2-ethylhexyl methacrylate, octyl methacrylate, lauryl methacrylate, stearyl methacrylate, styrene, acrylonitrile and methacrylonitrile. One of these monomers may be used alone, or a combination of two or more types can be used.
However, radically polymerizable monomers which include a carboxyl group, such as acrylic acid, methacrylic acid and the like, react with the amine and so their use is undesirable.

In a composition of this invention the proportions in which each of the (A), (B) and (C) components is included as the ratio of solid fractions are preferably from 45 to 85 mass% of the (A) component, from 10 to 40 mass% of the (B) component and from 5 to 30 mass% of the (C) component. More desirably there is from 55 to 70 mass% of the (A) component, from 20 to 30 mass% of the (B) component and from 10 to 20 mass% of the (C) component.
In those cases where the proportion of the (A) component included is less than 45 mass% the staining resistance is inadequate, and in those cases where it exceeds 85 mass% the solvent resistance is inadequate.
In those cases where the proportion of the (B) component included is less than 10 mass% the staining resistance is inadequate, and in those cases where it exceeds 40 mass% the workability is inadequate.
In those cases where the proportion of the (C) component included is less than 5 mass% the stability of the paint is inadequate, and in those cases where it exceeds 30 mass% the workability is inadequate.

The (D) component blocked polyisocyanate compound of this invention is used as a crosslinking agent which reacts with the abovementioned resins which contain hydroxyl groups.
Actual examples of blocked polyisocyanate compounds which can be used in the invention include those which have been produced by blocking with a blocking agent all of the isocyanate groups of a polyisocyanate compound such as the compounds known as isocyanate monomers, for example hexamethylene diisocyanate, isophorone diisocyanate, tolylene diisocyanate, diphenylmethane diisocyanate, xylylene diisocyanate and dicyclohexylmethane-4,4'-diisocyanate, and the polyisocyanate derivative such as the biuret forms, isocyanurate forms and trimethylolpropane adducts of these compounds.

Examples of the blocking agent include ketoxime based blocking agents such as ε-caprolactam, methyl ethyl ketoxime, methyl isoamyl ketoxime, methyl isobutyl ketoxime and the like, phenol-based blocking agents such as phenol, cresol, catechol, nitrophenol and the like, alcohol-based blocking agents such as isopropanol and trimethylolpropane, and active methylene-based blocking agents such as malonic acid esters and acetoacetate esters. One of these blocked polyisocyanate compounds can be used, or a combination of two or more types can be used.

The ratio of the number of mol of isocyanate group of the (D) component and the total number of mol of hydroxyl group of the (A), (B) and (C) components which are the base resins is preferably from 1/0.7 to 1/1.3, and most desirably from 1/0.8 to 1/1.2. In those cases where there are more isocyanate groups than a mol ratio of isocyanate group and hydroxyl group of 1/0.7 the solvent resistance is inadequate, and when the ratio is less than 1/1.3 the resistance to chemical attack is inadequate.

The top-coat paint compositions for pre-coating purposes of this invention can be compounded as they are or various additives such as color pigments, fillers, solvents, ultraviolet absorbers, antioxidants, flow-controlling agents and the like may be compounded therein as required. The paint compositions of this invention can be produced by mixing the abovementioned components together and compounding the various types of additive as required. No particular limitation is imposed upon the method of compounding the various components or the method of adding the various additives and a variety of methods can be used, and the order in which the components are mixed or the additions are made can also be varied.

The method in which an undercoat paint is coated onto a metal sheet and hardened and then a top-coat paint which contains from 5 to 200 parts by mass of pigment per 100 parts by mass of the total solid fraction of the (A), (B), (C) and (D) components in the paint composition of this invention is applied and heated and hardened to form a paint-finished metal sheet can be cited as a method of paint finishing a pre-coated steel sheet using a top-coat paint for pre-coating purposes of this invention. The amount of pigment compounded is most desirably from 10 to 150 parts by mass.

Various type of pigment such as organic pigments and inorganic pigments can be used for the pigment and, for example, metal pigments such as surface treated aluminum, copper, brass, bronze, stainless steel and mica-like iron oxide, flake-like metallic powders and mica fragments coated with titanium oxide or iron oxide can be used. Furthermore inorganic pigments such as titanium dioxide, iron oxide, yellow iron oxide and carbon black, organic pigments such as phthalocyanine blue, phthalocyanine green and quinacridone-based red pigments, precipitated barium sulfate and true pigments such as clay, silica and talc can also be used.

The paints which are generally used as undercoat paints can be used as undercoat paints. The coating of the undercoat and the top-coat paint can be carried out using a variety of methods, but coating methods with a roll coater, a flow coater or a spray, for example, are preferred. In those cases where the top-coat paint is applied with a roll coater the natural type and the reverse type can be considered, but the reverse type is preferred from the viewpoint of the surface smoothness of the paint film. The paint films applied with the undercoat paint and the top coat paint may be coated sequentially and hardened each time and the hardening should generally be carried out under conditions of from 5 seconds to 5 minutes at from 100 to 300°C and in the pre-coated painting field where coating is carried out with coil coating, for example, the hardening should generally be carried out under hardening conditions of from 15 to 120 minutes with a highest temperature reached by the base material of from 120 to 260°C.

No particular limitation is imposed upon the thickness of the paint film obtained but generally the undercoat paint film thickness is within the range from 1 to 10 µm and the top-coat paint film thickness is within the range from 6 to 60 µm, and preferably within the range from 15 to 30 µm.
Various types of metal sheet can be used for said metal sheet and examples include cold rolled steel sheet, zinc plated steel sheets such as electrically zinc plated steel sheets, electrically zinc alloy plated steel sheets, molten zinc plated steel sheets (non-alloyed), molten zinc plated steel sheets (alloyed) and molten zinc/aluminum alloy plated steel sheets, stainless steel sheets, aluminum sheets, aluminum alloy sheets and the like. When coating the undercoat paint on a metal sheet the surface of the metal sheet is preferably subjected to a pre-treatment before painting, and any of the chemical forming treatments which are used as pre-treatments for pre-coated metal purposes may be used as the painting pre-treatment, and examples of such pre-treatments include chromate chemical forming treatments, phosphate chemical forming treatments and composite oxide film treatments.

### [Illustrative Examples]

The invention is described in more practical terms below by means of illustrative examples.

Moreover, the invention is not limited in any way by these illustrative examples.

### Production of (A) Component Polyester Resins

### <Example of Production 1: Production of A-1>

Isophthalic acid (15 parts by mass), 25 parts by mass of phthalic acid anhydride, 22.5 parts by mass of adipic acid, 27.5 parts by mass of neopentyl glycol and 10 parts by mass of ethylene glycol were introduced into a four-necked flask which had been furnished with a thermometer, a Dean and Stark adaptor (adaptor for removing the water etc. during the condensation reaction when synthesizing the polyester), a reflux condenser, a nitrogen delivery tube and a stirrer and the mixture was stirred while raising the temperature from 150 to 220°C and a condensation reaction was carried out in such a way that the acid value fell below 7 mgKOH/g. Subsequently, 39.3 parts by mass of Solvesso 100 (trade name, aromatic naphtha-based solvent, produced by the Exxon Chemical Co.) and 19.6 parts by mass of cylcohexanone were added and as a result a solution of solid fraction 60.1 mass% of the polyester resin A-1 of resin acid value 6.8 mgKOH/g, hydroxyl group value 21.6 mgKOH/g and number average molecular weight 3,790 was obtained.

### <Examples of Production 2 to 9>

Solutions of the polyester resins A-2 to A-9 were obtained with the same method as in Example of Production 1 by introducing the raw materials indicated in Table 1. Furthermore, the property values of the resins obtained are shown in Table 1.

**Table 1**

| | | A-1 | A-2 | A-3 | A-4 | A-5 | A-6 | A-7 | A-8 | A-9 |
|---|---|---|---|---|---|---|---|---|---|---|
| Compound | Isophthalic acid | 15.0 | 15.0 | 20.0 | 5.0 | 8.0 | 15.0 | 15.0 | 15.0 | 10.0 |
| | Phthalic acid anhydride | 25.0 | 25.0 | 20.0 | 30.0 | 25.0 | 25.0 | 25.0 | 25.0 | 25.0 |
| | Adipic acid | 22.5 | 20.0 | 22.0 | 22.0 | 25.0 | 23.0 | 20.0 | - | 21.0 |
| | Maleic acid anhydride | - | - | - | - | - | - | - | - | - |
| | Octylic acid | - | - | - | 6.0 | - | - | 2.5 | 22.5 | 8.0 |
| | Neopentyl glycol | 27.5 | 31.0 | 28.0 | 22.0 | 35.0 | 27.0 | 30.5 | 22.5 | 26.0 |
| | Ethylene glycol | 10.0 | 4.0 | 10.0 | 10.0 | - | 10.0 | 7.0 | 11.0 | 10.0 |
| | 1,6-Hexanediol | - | 5.0 | - | 5.0 | 7.0 | - | - | - | - |
| | Trimethylolpropane | - | - | - | - | - | - | - | 4.0 | - |
| | Solvesso 100 | 39.3 | 39.5 | 39.1 | 39.7 | 39.7 | 39.4 | 39.4 | 39.2 | 39.5 |
| | Cyclohexanone | 19.6 | 19.8 | 19.6 | 19.8 | 19.8 | 19.7 | 19.7 | 19.6 | 19.7 |
| Property Values | Solid fraction (%) | 60.1 | 59.8 | 59.1 | 59.6 | 59.9 | 59.6 | 59.2 | 59.1 | 60.4 |
| | Resin acid value (mgKOH/g) | 6.8 | 6.7 | 6.3 | 6.6 | 6.8 | 17.5 | 6.9 | 6.7 | 6.9 |
| | Resin hydroxyl group value (mgKOH/g) | 21.6 | 14.5 | 31.2 | 19.2 | 16.0 | 22.8 | 9.0 | 38.2 | 20.6 |
| | Number average molecular weight | 3790 | 4320 | 3150 | 2310 | 5150 | 3020 | 4540 | 3870 | 1870 |

### Production of (C) Component Polyester Resins

### <Example of Production 1: Production of C-1>

Isophthalic acid (10 parts by mass), 25 parts by mass of phthalic acid anhydride, 21 parts by mass of adipic acid, 30 parts by mass of neopentyl glycol and 14 parts by mass of trimethylolpropane were introduced into a four-necked flask which had been furnished with a thermometer, a Dean and Stark adaptor, a reflux condenser, a nitrogen delivery tube and a stirrer and the mixture was stirred while raising the temperature from 150 to 220°C and a condensation reaction was carried out in such a way that the acid value fell below 12 mgKOH/g. Subsequently, 40 parts by mass of Solvesso 100 and 20 parts by mass of cylcohexanone were added and as a result a solution of solid fraction 60.2 mass% of the polyester resin C-1 of resin acid value 10.9 mgKOH/g, hydroxyl group value 95.6 mgKOH/g and number average molecular weight 2510 was obtained.

### <Examples of Production 2 to 10>

Solutions of the polyester resins C-2 to C-10 were obtained with the same method as in Example of Production 1 by introducing the raw materials indicated in Table 2. Furthermore, the property values of the resins obtained are shown in Table 2.

**Table 2**

| | | C-1 | C-2 | C-3 | C-4 | C-5 | C-6 | C-7 | C-8 | C-9 | C-10 |
|---|---|---|---|---|---|---|---|---|---|---|---|
| Compound | Isophthalic acid | 10.0 | 10.0 | 8.0 | 15.0 | 10.0 | 10.0 | 14.0 | - | 10.0 | 11.5 |
| | Phthalic acid anhydride | 25.0 | 25.0 | 25.0 | 25.0 | 25.0 | 25.0 | 25.0 | 32.0 | 25.0 | 25.0 |
| | Adipic acid | 21.0 | 20.0 | 21.0 | 10.0 | 22.0 | 22.0 | 21.0 | 21.0 | 11.0 | 21.0 |
| | Maleic acid anhydride | - | - | - | - | - | - | - | - | - | - |
| | octylic acid | - | 3.0 | - | 8.0 | - | - | - | - | 12.0 | - |
| | Neopentyl glycol | 30.0 | 32.0 | 30.0 | 30.0 | 31.0 | 30.0 | 30.0 | 30.0 | 30.0 | 32.5 |
| | Ethylene glycol | - | - | - | - | - | - | 5.0 | - | - | - |
| | Trimethylolpropane | 14.0 | 10.0 | 16.0 | 12.0 | 12.0 | 13.0 | 5.0 | 17.0 | 12.0 | 10.0 |
| | Solvesso 100 | 40.0 | 39.9 | 40.2 | 40.2 | 39.9 | 40.0 | 39.6 | 40.6 | 40.4 | 39.8 |
| | Cyclohexanone | 20.0 | 20.0 | 20.1 | 20.1 | 19.9 | 20.0 | 19.8 | 20.3 | 20.2 | 19.9 |
| Property Values | Solid fraction (%) | 60.2 | 60.2 | 59.0 | 59.9 | 59.2 | 60.5 | 59.0 | 60.3 | 59.5 | 59.3 |
| | Resin acid value (mgKOH/g) | 10.9 | 11.2 | 10.8 | 11.2 | 11.1 | 24.5 | 11.5 | 10.6 | 11.3 | 11.0 |
| | Resin hydroxyl group value (mgKOH/g) | 95.6 | 56.3 | 141.6 | 93.8 | 81.0 | 91.4 | 45.1 | 155.1 | 104.2 | 62.3 |
| | Number average molecular weight | 2510 | 2820 | 1620 | 1330 | 3620 | 2110 | 3250 | 1560 | 960 | 4210 |

### Production of (B) Component Acrylic Resins

### <Example of Production 1: Production of B-1>

Solvesso 100 (10 parts by mass) and 10 parts by mass of cyclohexanone were introduced into a four-necked flask which had been furnished with a thermometer, a reflux condenser, a stirrer and a dropping funnel, heated under a current of nitrogen and maintained at 85°C. Then a liquid mixture of 10 parts by mass of styrene, 15 parts by mass of n-butyl methacrylate, 10 parts by mass of 2-ethylhexyl methacrylate, 11 parts by mass of 2-hydroxyethyl methacrylate, 4 parts by mass of dimethylaminoethyl methacrylate, 1 part by mass of azobisisobutyronitrile and 3 parts by mass of butyl cellosolve was added dropwise continuously over a period of 2 hours and then, after maintaining the temperature at 85°C for a further period of 1 hour, a liquid mixture of 0.2 part by mass of azobisisobutyronitrile dissolved in 3 parts by mass of butyl cellosolve was added and the reaction was completed by maintaining the temperature at 85°C for a further period of 5 hours. Then, after cooling the mixture to room temperature, 5 parts by mass of Solvesso 100 and 3 parts by mass of cyclohexanone were added and as a result a solution of solid fraction 59.9 mass% of the acrylic resin B-1 of hydroxyl group value 98.2 mgKOH/g, amine value 28.1 mgKOH/g and number average molecular weight 4520 was obtained. The result obtained on measuring the glass transition temperature of the resin B-1 was 23.8°C.

### <Examples of Production 2 to 18>

Solutions of the acrylic resins B-2 to B-18 were obtained with the same method as in Example of Production 1 by introducing the raw materials indicated in Table 3 and Table 4. Furthermore, the property values of the resins obtained are shown in Table 3 and Table 4.

**Table 3**

| | | B-1 | B-2 | B-3 | B-4 | B-5 | B-6 | B-7 | B-8 | B-9 |
|---|---|---|---|---|---|---|---|---|---|---|
| Compound | Solvesso 100 | 10.0 | 10.0 | 10.0 | 10.0 | 10.0 | 10.0 | 10.0 | 10.0 | 10.0 |
| | Cyclohexanone | 10.0 | 10.0 | 10.0 | 10.0 | 10.0 | 10.0 | 10.0 | 10.0 | 10.0 |
| | Styrene | 10.0 | 12.0 | 10.0 | 10.0 | 10.0 | 10.0 | 10.0 | - | 15.0 |
| | Methyl methacrylate | - | - | - | - | - | - | - | - | - |
| | n-Butyl methacrylate | 15.0 | 17.5 | 10.5 | 15.0 | 15.0 | 15.0 | 15.0 | 10.0 | 15.0 |
| | 2-Ethylhexyl methacrylate | 10.0 | 10.0 | 10.0 | 12.4 | 7.5 | 10.0 | 10.0 | 25.0 | 5.0 |
| | 2-Hydroxyethyl methacrylate | 11.0 | 6.5 | 16.5 | 11.0 | 11.0 | 11.0 | 11.0 | 11.0 | 11.0 |
| | Dimethylaminoethyl methacrylate | 4.0 | 4.0 | 4.0 | 1.6 | 6.5 | 4.0 | 4.0 | 4.0 | 4.0 |
| | Lauryl methacrylate | - | - | - | - | - | - | - | - | - |
| | Cyclohexyl methacrylate | - | - | - | - | - | - | - | - | - |
| | Azobisisobutyronitrile | 1.0 | 1.0 | 1.0 | 1.0 | 1.0 | 2.5 | 0.7 | 1.0 | 1.0 |
| | Butyl cellosolve | 3.0 | 3.0 | 3.0 | 3.0 | 3.0 | 3.0 | 3.0 | 3.0 | 3.0 |
| | Azobisisobutyronitrile | 0.2 | 0.2 | 0.2 | 0.2 | 0.2 | 0.2 | 0.2 | 0.2 | 0.2 |
| | Butyl cellosolve | 3.0 | 3.0 | 3.0 | 3.0 | 3.0 | 3.0 | 3.0 | 3.0 | 3.0 |
| | Solvesso 100 | 5.0 | 5.0 | 5.0 | 5.0 | 5.0 | 5.0 | 5.0 | 5.0 | 5.0 |
| | Cyclohexanone | 3.0 | 3.0 | 3.0 | 3.0 | 3.0 | 3.0 | 3.0 | 3.0 | 3.0 |
| Property Values | Solid fraction (%) | 59.9 | 60.2 | 60.5 | 60.1 | 60.8 | 59.9 | 60.1 | 60.3 | 60.6 |
| | Resin hydroxyl group value (mgKOH/g) | 98.2 | 55.1 | 141.6 | 94.6 | 95.2 | 96.8 | 97.8 | 97.5 | 98.0 |
| | Resin amine value (mgKOH/g) | 28.1 | 27.9 | 28.8 | 11.5 | 46.1 | 27.6 | 28.3 | 27.6 | 27.8 |
| | Number average molecular weight | 4520 | 4630 | 4150 | 4260 | 4420 | 1840 | 7120 | 4090 | 4320 |
| | Glass transition temperature (°C) | 23.8 | 22.5 | 18.5 | 21.1 | 29.5 | 16.4 | 28.8 | 6.3 | 45.1 |

**Table 4**

| | | B-10 | B-11 | B-12 | B-13 | B-14 | B-15 | B-16 | B-17 | B-18 |
|---|---|---|---|---|---|---|---|---|---|---|
| Compound | Solvesso 100 | 10.0 | 10.0 | 10.0 | 10.0 | 10.0 | 10.0 | 10.0 | 10.0 | 10.0 |
| | Cyclohexanone | 10.0 | 10.0 | 10.0 | 10.0 | 10.0 | 10.0 | 10.0 | 10.0 | 10.0 |
| | Styrene | 12.0 | 5.0 | 5.0 | 10.0 | 6.5 | 10.0 | 10.0 | - | 10.0 |
| | Methyl methacrylate | - | - | 5.5 | - | - | - | - | - | - |
| | n-Butyl methacrylate | 18.5 | 13.0 | 22.5 | 15.2 | 15.0 | 15.0 | 15.0 | 15.0 | 10.0 |
| | 2-Ethylhexyl methacrylate | 10.0 | 10.0 | 6.0 | 12.5 | 10.0 | 10.0 | 10.0 | 10.0 | - |
| | 2-Hydroxyethyl methacrylate | 5.5 | 18.0 | 11.0 | 11.0 | 11.0 | 11.0 | 11.0 | 11.0 | 11.0 |
| | Dimethylaminoethyl methacrylate | 4.0 | 4.0 | - | 1.3 | 7.5 | 4.0 | 4.0 | 4.0 | 4.0 |
| | Lauryl methacrylate | - | - | - | - | - | - | - | 10.0 | - |
| | Cyclohexyl methacrylate | - | - | - | - | - | - | - | - | 15.0 |
| | Azobisisobutyronitrile | 1.0 | 1.0 | 1.0 | 1.0 | 1.0 | 3.0 | 0.5 | 1.0 | 1.0 |
| | Butyl cellosolve | 3.0 | 3.0 | 3.0 | 3.0 | 3.0 | 3.0 | 3.0 | 3.0 | 3.0 |
| | Azobisisobutyronitrile | 0.2 | 0.2 | 0.2 | 0.2 | 0.2 | 0.2 | 0.2 | 0.2 | 0.2 |
| | Butyl cellosolve | 3.0 | 3.0 | 3.0 | 3.0 | 3.0 | 3.0 | 3.0 | 3.0 | 3.0 |
| | Solvesso 100 | 5.0 | 5.0 | 5.0 | 5.0 | 5.0 | 5.0 | 5.0 | 5.0 | 5.0 |
| | Cyclohexanone | 3.0 | 3.0 | 3.0 | 3.0 | 3.0 | 3.0 | 3.0 | 3.0 | 3.0 |
| Property Values | Solid fraction (%) | 60.2 | 60.5 | 61.1 | 59.0 | 60.7 | 59.6 | 60.2 | 60.5 | 60.0 |
| | Resin hydroxyl group value (mgKOH/g) | 46.6 | 156.9 | 94.4 | 95.2 | 96.3 | 98.4 | 97.7 | 93.5 | 92.8 |
| | Resin amine value (mgKOH/g) | 28.1 | 28.4 | 0 | 9.6 | 52.8 | 28.2 | 27.6 | 28.1 | 28.0 |
| | Number average molecular weight | 3960 | 4250 | 4120 | 4460 | 4050 | 1390 | 8430 | 4390 | 4510 |
| | Glass transition temperature (°C) | 28.8 | 27.7 | 26.2 | 24.6 | 19.0 | 15.4 | 30.1 | -3.5 | 54.2 |

### Production of Paint Compositions

### <Example 1>

The (A) component polyester resin A-1 (60 parts by mass), 15 parts by mass of the (C) component polyester resin C-1, 5 parts by mass of Solvesso 100, 5 parts by mass of cyclohexanone and 75 parts by mass of titanium oxide were introduced into a container and the mixture was dispersed in a sand mill until the particle size was less than 10 µm and a pigment milled paste was obtained. Then 25 parts by mass of the (B) component acrylic resin B-1 were added little by little to this milled paste with stirring to provide uniformity and then 22 parts by mass of the (D) component Desmodur BL3175 (trade name, produced by the Sumitomo Beyer Co., blocked isocyanate compound, solid fraction 75 mass%, effective NCO 11.2 mass%) was added little by little with stirring to provide uniformity and then finally 1.0 part by mass of dibutyltin dilaurate which is an isocyanate dissociation catalyst and 0.5 part by mass of the surface controlling agent BYK-325 (produced by Byk Chemie Co.) were added and admixed to prepare a solution type paint.

The paint obtained was subjected to viscosity adjustment with a mixed solvent comprising Solvesso 100/cyclohexanone (content ratio 50 parts by mass/50 parts by mass) to a Ford cup No.4 viscosity of 120 ± 10 seconds and the paint P-1 for pre-coating purposes was obtained. Next Pre-color Primer HP-32 (trade name, produced by the BASF Coatings Japan Co., epoxy resin based paint) was coated as an undercoat paint on a molten 55% aluminum/zinc based alloy plated steel sheet (Galvalium Steel Sheet), the steel sheet base material having been treated with a painting-type chromate treatment, of sheet thickness 0.35 mm and baked in such a way that the highest temperature reached by the steel sheet was 210°C, and then the paint P-1 for pre-coating purposes was coated using a roll coater in such a way as to provide a film thickness of 20 µm and then baked in such a way that the highest temperature reached by the steel sheet was 240°C. The test sheet so obtained was submitted for paint film property testing.

### <Examples 2 to 22 and Comparative Examples 1 to 27>

The paints P-2 to P-48 for pre-coating purposes were obtained using the raw materials shown in Tables 5 to 11 with the same method as in Example 1 and then painting was carried out in the same way as in Example 1. Moreover, in the tables the solid fraction ratio is the ratio by mass of the solid fractions and the NCO/OH functional group ratio is the mol ratio of the functional groups.

**Table 5**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Top-coat paint composition for pre-coating purposes | | P-1 | P-2 | P-3 | P-4 | P-5 | P-6 | P-7 | P-8 | P-9 | P-10 |
| A Component | A-1 | 60.00 | 60.00 | 60.00 | 60.00 | 75.00 | 50.00 | | | | |
| | A-2 | | | | | | | 60.00 | | | |
| | A-3 | | | | | | | | 60.0 | | |
| | A-4 | | | | | | | | | 60.0 | |
| | A-5 | | | | | | | | | | 60.0 |
| B Component | B-1 | 25.0 | 25.0 | 25.0 | 25.0 | 15.0 | 30.0 | 25.0 | 25.0 | 25.0 | 25.0 |
| C Component | C-1 | 15.0 | 15.0 | 15.0 | 15.0 | 10.0 | 20.0 | 15.0 | 15.0 | 15.0 | 15.0 |
| D Component | Desmodur BL3175 1) | 22.0 | | 26.0 | 16.5 | 17.0 | 25.0 | 20.0 | 24.00 | 21.0 | 20.0 |
| | Desmodur BL4265 2) | | 33.0 | | | | | | | | |
| Pigment | Titanium oxide 3) | 75.0 | 80.0 | 80.0 | 70.0 | 70.0 | 80.0 | 75.0 | 75.0 | 75.0 | 75.0 |
| Catalyst | Dibutyltin dilaurate | 1.0 | 1.0 | 1.0 | 1.0 | 1.0 | 1.0 | 1.0 | 1.0 | 1.0 | 1.0 |
| Additive | BYK-325 4) | 0.5 | 0.5 | 0.5 | 0.5 | 0.5 | 0.5 | 0.5 | 0.5 | 0.5 | 0.5 |
| Solvent | Solvesso 100 5) | 17.0 | 20.0 | 19.0 | 19.0 | 13.0 | 22.0 | 20.0 | 18.0 | 14.0 | 20.0 |
| | Cyclohexanone | 17.0 | 20.0 | 19.0 | 19.0 | 13.0 | 22.0 | 20.0 | 18.0 | 14.0 | 20.0 |
| | | | | | | | | | | | |
| | **Total** | 232.5 | 251.5 | 245.5 | 226.0 | 214.5 | 250.5 | 236.5 | 236.5 | 225.5 | 236.5 |
| Solid fractions | A Component | 36.06 | 36.06 | 36.06 | 36.06 | 45.075 | 30.05 | 35.88 | 35.46 | 35.76 | 35.94 |
| | B Component | 14.98 | 14.98 | 14.98 | 14.98 | 8.99 | 17.97 | 14.98 | 14.98 | 14.98 | 14.98 |
| | C Component | 9.03 | 9.03 | 9.03 | 9.03 | 6.02 | 12.04 | 9.03 | 9.03 | 9.03 | 9.03 |
| | Total A+B+C Solid Fraction | 60.07 | 60.07 | 60.07 | 60.07 | 60.08 | 60.06 | 59.89 | 59.47 | 59.77 | 59.95 |
| Solid fraction | A/B/C | 60/25/15 | 60/25/15 | 60/25/15 | 60/25/15 | 75/15/10 | 50/30/20 | 60/25/15 | 60/25/15 | 60/25/15 | 60/25/15 |
| NCO/OH Functional group ratio | | 1/0.95 | 1/0.96 | 1/0.80 | 1/1.26 | 1/0.96 | 1/0.95 | 1/0.96 | 1/0.96 | 1/0.96 | 1/0.97 |

**Table 6**

| | | Example 11 | Example 12 | Example 13 | Example 14 | Example 15 | Example 16 | Example 17 | Example 18 |
|---|---|---|---|---|---|---|---|---|---|
| Top-coat paint composition for pre-coating purposes | | P-11 | P-12 | P-13 | P-14 | P-15 | P-16 | P-17 | P-1811 |
| A Component | A-1 | 60.00 | 60.00 | 60.00 | 60.00 | 60.00 | 60.00 | 60.0 | 60.0 |
| B Component | B-2 | 25.0 | | | | | | | |
| | B-3 | | 25.0 | | | | | | |
| | B-4 | | | 25.0 | | | | | |
| | B-5 | | | | 25.0 | | | | |
| | B-6 | | | | | 25.0 | | | |
| | B-7 | | | | | | 25.0 | | |
| | B-8 | | | | | | | 25.0 | |
| | B-9 | | | | | | | | 25.0 |
| C Component | C-1 | 15.0 | 15.0 | 15.0 | 15.0 | 15.0 | 15.0 | 15.0 | 15.0 |
| D Component | Desmodur BL3175 1) | 17.5 | 26.5 | 21.5 | 21.5 | 21.5 | 22.0 | 22.0 | 22.00 |
| | Desmodur BL4265 2) | | | | | | | | |
| Pigment | Titanium oxide 3) | 75.0 | 80.0 | 75.0 | 75.0 | 75.0 | 75.0 | 75.0 | 75.0 |
| Catalyst | Dibutyltin dilaurate | 1.0 | 1.0 | 1.0 | 1.0 | 1.0 | 1.0 | 1.0 | 1.0 |
| Additive | BYK-325 4) | 0.5 | 0.5 | 0.5 | 0.5 | 0.5 | 0.5 | 0.5 | 0.5 |
| Solvent | Solvesso 100 5) | 18.0 | 20.0 | 18.0 | 19.0 | 13.0 | 22.0 | 16.0 | 20.0 |
| | Cyclohexanone | 18.0 | 20.0 | 18.0 | 19.0 | 13.0 | 22.0 | 16.0 | 20.0 |
| | | | | | | | | | |
| | **Total** | 230.0 | 248.0 | 234.0 | 236.0 | 224.0 | 242.5 | 230.5 | 238.5 |
| Solid fractions | A Component | 36.06 | 36.06 | 36.06 | 36.06 | 36.06 | 36.06 | 36.06 | 36.06 |
| | B Component | 15.05 | 15.13 | 15.03 | 15.20 | 14.98 | 15.03 | 15.08 | 15.20 |
| | C Component | 9.03 | 9.03 | 9.03 | 9.03 | 9.03 | 9.03 | 9.03 | 9.03 |
| | Total A+B+C Solid Fraction | 60.14 | 60.22 | 60.12 | 60.29 | 60.07 | 60.12 | 60.17 | 60.29 |
| Solid fraction ratio | A/B/C | 60/25/15 | 60/25/15 | 60/25/15 | 60/25/15 | 60/25/15 | 60/25/15 | 60/25/15 | 60/25/15 |
| NCO/OH Functional group ratio | | 1/0.94 | 1/0.95 | 1/0.95 | 1/0.96 | 1/0.96 | 1/0.95 | 1/0.95 | 1/0.95 |

**Table 7**

| | | Example 19 | Example 20 | Example 21 | Example 22 |
|---|---|---|---|---|---|
| Top-coat paint composition for pre-coating purposes | | P-19 | P-20 | P-21 | P-22 |
| A Component | A-1 | 60.00 | 60.00 | 60.00 | 60.00 |
| B Component | B-1 | 25.0 | 25.0 | 25.0 | 25.0 |
| C Component | C-2 | 15.0 | | | |
| | C-3 | | 15.0 | | |
| | C-4 | | | 15.0 | |
| | C-5 | | | | 15.0 |
| D Component | Desmodur BL3175 1) | 19.5 | 24.5 | 21.5 | 21.0 |
| Pigment | Titanium oxide 3) | 75.0 | 80.0 | 75.0 | 75.0 |
| Catalyst | Dibutyltin dilaurate | 1.0 | 1.0 | 1.0 | 1.0 |
| Additive | BYK-325 4) | 0.5 | 0.5 | 0.5 | 0.5 |
| Solvent | Solvesso 100 5) | 17.0 | 20.0 | 16.0 | 18.0 |
| | Cyclohexanone | 17.0 | 20.0 | 16.0 | 18.0 |
| | | | | | |
| | **Total** | 230.0 | 246.0 | 230.0 | 233.5 |
| Solid fractions | A Component | 36.06 | 36.06 | 36.06 | 36.06 |
| | B Component | 14.98 | 14.98 | 14.98 | 14.98 |
| | C Component | 9.03 | 9.03 | 8.85 | 8.985 |
| | Total A+B+C Solid Fraction | 60.07 | 60.07 | 59.89 | 60.02 |
| Solid fraction ratio | A/B/C | 60/25/15 | 60/25/15 | 60/25/15 | 60/25/15 |
| NCO/OH Functional group ratio | | 1/0.95 | 1/0.96 | 1/0.96 | 1/0.94 |

**Table 8**

| | | Comp.Ex. 1 | Comp.Ex. 2 | Comp.Ex. 3 | Comp.Ex. 4 | Comp.Ex. 5 | Comp.Ex. 6 | Comp.Ex. 7 | Comp.Ex. 8 |
|---|---|---|---|---|---|---|---|---|---|
| Top-coat paint composition for pre-coating purposes | | P-23 | P-24 | P-25 | P-26 | P-27 | P-28 | P-29 | P-30 |
| A Component | A-1 | 60.00 | 60.00 | 40.0 | 85.0 | 75.0 | 50.0 | 70.0 | 50.0 |
| B Component | B-1 | 25.0 | 25.0 | 35.0 | 10.0 | 5.0 | 45.0 | 27.0 | 15.0 |
| C Component | C-1 | 15.0 | 15.0 | 25.0 | 5.0 | 20.0 | 5.0 | 3.0 | 35.0 |
| D Component | Desmodur BL3175 1) | 31.0 | 15.5 | 28.0 | 14.0 | 17.0 | 25.0 | 18.5 | 25.0 |
| Pigment | Titanium oxide 3) | 80.0 | 70.0 | 80.0 | 70.0 | 70.0 | 80.0 | 75.0 | 80.0 |
| Catalyst | Dibutyltin dilaurate | 1.0 | 1.0 | 1.0 | 1.0 | 1.0 | 1.0 | 1.0 | 1.0 |
| Additive | BYK-325 4) | 0.5 | 0.5 | 0.5 | 0.5 | 0.5 | 0.5 | 0.5 | 0.5 |
| Solvent | Solvesso 100 5) | 16.0 | 15.0 | 19.0 | 12.0 | 14.0 | 18.0 | 16.0 | 17.0 |
| | Cyclohexanone | 16.0 | 15.0 | 19.0 | 12.0 | 14.0 | 18.0 | 16.0 | 17.0 |
| | | | | | | | | | |
| | **Total** | 244.5 | 217.0 | 247.5 | 209.5 | 216.5 | 242.5 | 227.0 | 240.5 |
| Solid fractions | A Component | 35.64 | 35.64 | 23.76 | 50.49 | 44.55 | 29.7 | 41.58 | 29.7 |
| | B Component | 14.98 | 14.98 | 20.97 | 5.99 | 3.00 | 26.96 | 16.17 | 8.99 |
| | C Component | 9.03 | 9.03 | 15.05 | 3.01 | 12.04 | 3.01 | 1.81 | 21.07 |
| | Total A+B+C Solid Fraction | 59.65 | 59.65 | 59.78 | 59.49 | 59.59 | 59.67 | 59.56 | 59.76 |
| Solid fraction ratio | A/B/C | 60/25/15 | 60/25/15 | 40/35/25 | 85/10/5 | 75/5/20 | 50/45/5 | 70/27/3 | 50/15/35 |
| NCO/OH Functional group ratio | | 1/0.67 | 1/1.34 | 1/0.96 | 1/0.94 | 1/0.95 | 1/0.96 | 1/0.96 | 1/0.95 |

**Table 9**

| | | Comp.Ex. 9 | Comp.Ex.10 | Comp.Ex. 11 | Comp.Ex. 12 | Comp. Ex. 13 |
|---|---|---|---|---|---|---|
| Top-coat paint composition for pre-coating purposes | | P-31 | P-32 | P-33 | P-34 | P-35 |
| A Component | A-6 | 60.00 | | | | |
| | A-7 | | 60.0 | | | |
| | A-8 | | | 60.0 | | |
| | A-9 | | | | 60.0 | |
| | Vylon GK13CS 6) | | | | | 72.0 |
| B Component | B-1 | 25.0 | 25.0 | 25.0 | 25.0 | 25.0 |
| C Component | C-1 | 15.0 | 15.0 | 15.0 | 15.0 | 10.0 |
| D Component | Desmodur BL3175 1) | 22.0 | 18.5 | 26.0 | 21.5 | 21.5 |
| Pigment | Titanium oxide 3) | 75.0 | 75.0 | 80.0 | 75.0 | 75.0 |
| Catalyst | Dibutyltin dilaurate | 1.0 | 1.0 | 1.0 | 1.0 | 1.0 |
| Additive | BYK-325 4) | 0.5 | 0.5 | 0.5 | 0.5 | 0.5 |
| Solvent | Solvesso 100 5) | 17.0 | 18.0 | 21.0 | 15.0 | 15.0 |
| | Cyclohexanone | 17.0 | 18.0 | 21.0 | 15.0 | 15.0 |
| | | | | | | |
| | **Total** | 232.5 | 231.5 | 249.5 | 228.0 | 240.0 |
| Solid fractions | A Component | 35.76 | 35.52 | 35.46 | 36.24 | 36 |
| | B Component | 14.98 | 14.98 | 14.98 | 14.98 | 14.98 |
| | C Component | 9.03 | 9.03 | 9.03 | 9.03 | 9.03 |
| | Total A+B+C Solid Fraction | 59.77 | 59.53 | 59.47 | 60.25 | 60.01 |
| Solid fraction ratio | A/B/C | 60/25/15 | 60/25/15 | 60/25/15 | 60/25/15 | 60/25/15 |
| NCO/OH Functional group ratio | | 1/0.96 | 1/0.96 | 1/0.95 | 1/0.96 | 1/0.95 |

**[0050] Table 10**

| | | Comp. Ex. 14 | Comp. Ex. 15 | Comp. Ex. 16 | Comp. Ex. 17 | Comp. Ex. 18 | Comp. Ex. 19 | Comp. Ex. 20 | Comp. Ex. 21 | Comp. Ex. 22 |
|---|---|---|---|---|---|---|---|---|---|---|
| Top-coat paint composition for pre-coating purposes | | P-36 | P-37 | P-38 | P-39 | P-40 | P-41 | P-42 | P-43 | P-44 |
| A Component | A-1 | 60.00 | 60.00 | 60.00 | 60.00 | 60.00 | 60.00 | 60.0 | 60.0 | 60.0 |
| B Component | B-10 | 25.0 | | | | | | | | |
| | B-11 | | 25.0 | | | | | | | |
| | B-12 | | | 25.0 | | | | | | |
| | B-13 | | | | 25.0 | | | | | |
| | B-14 | | | | | 25-0 | | | | |
| | B-15 | | | | | | 25.0 | | | |
| | B-16 | | | | | | | 25.0 | | |
| | B-17 | | | | | | | | 25.0 | |
| | B-18 | | | | | | | | | 25.0 |
| C Component | C-1 | 15.0 | 15.0 | 15.0 | 15.0 | 15.0 | 15.0 | 15.0 | 15.0 | 15.0 |
| D Component | Desmodur BL3175 1) | 16.5 | 28.05 | 21.5 | 21.5 | 22.0 | 22.0 | 22.0 | 21.5 | 21.5 |
| Pigment | Titanium oxide 3) | 75.0 | 80.0 | 75.0 | 75.0 | 75.0 | 75.0 | 75.0 | 75.0 | 75.0 |
| Catalyst | Dibutyltin dilaurate | 1.0 | 1.0 | 1.0 | 1.0 | 1.0 | 1.0 | 1.0 | 1.0 | 1.0 |
| Additive | BYK-325 4) | 0.5 | 0.5 | 0.5 | 0.5 | 0.5 | 0.5 | 0.5 | 0.5 | 0.5 |
| Solvent | Solvesso 100 5) | 19.0 | 17.0 | 18.0 | 16.0 | 17.0 | 15.0 | 19.0 | 16.0 | 18.0 |
| | Cyclohexanone | 19.0 | 17.0 | 18.0 | 16.0 | 17.0 | 15.0 | 19.0 | 16.0 | 18.0 |
| | | | | | | | | | | |
| | **Total** | 231.0 | 243.0 | 234.0 | 230.0 | 232.5 | 228.5 | 236.5 | 230.0 | 234.0 |
| Solid fractions | A Component | 36.06 | 36.06 | 36.06 | 36.06 | 36.06 | 36.06 | 36.06 | 36.06 | 36.06 |
| | B Component | 15.08 | 15.13 | 15.28 | 14.75 | 15.18 | 14.90 | 15.05 | 15.13 | 15.00 |
| | C Component | 9.03 | 9.03 | 9.03 | 9.03 | 9.03 | 9.03 | 9.03 | 9.03 | 9.03 |
| | Total A+B+C Solid Fraction | 60.17 | 60.22 | 60.37 | 59.84 | 60.27 | 59.99 | 60.14 | 60.22 | 60.09 |
| Solid fraction ratio | A/B/C | 60/25/15 | 60/25/15 | 60/25/15 | 60/25/15 | 60/25/15 | 60/25/15 | 60/25/15 | 60/25/15 | 60/25/15 |
| NCO/OH Functional group ratio | | 1/0.95 | 1/0.96 | 1/0.96 | 1/0.95 | 1/0.94 | 1/0.94 | 1/0.95 | 1/0.95 | 1/0.94 |

**Table 11**

| | | Comp.Ex. 23 | Comp.Ex. 24 | Comp.Ex. 25 | Comp.Ex. 26 | Comp. Ex. 27 |
|---|---|---|---|---|---|---|
| Top-coat paint composition for pre-coating purposes | | P-45 | P-46 | P-47 | P-48 | P-49 |
| A Component | A-1 | 60.00 | 60.00 | 60.00 | 60.00 | 60.00 |
| B Component | B-1 | 25.0 | 25.0 | 25.0 | 25.0 | 25.0 |
| | C-6 | 15.0 | | | | |
| C Component | C-7 | | 15.0 | | | |
| | C-8 | | | 15.0 | | |
| | C-9 | | | | 15.0 | |
| | C-10 | | | | | 15.0 |
| D Component | Desmodur BL3175 1) | 21.5 | 18.5 | 25.5 | 22.5 | 19.5 |
| Pigment | Titanium oxide 3) | 75.0 | 75.0 | 80.0 | 75.0 | 75.0 |
| Catalyst | Dibutyltin dilaurate | 1.0 | 1.0 | 1.0 | 1.0 | 1.0 |
| Additive | BYK-325 4) | 0.5 | 0.5 | 0.5 | 0.5 | 0.5 |
| Solvent | Solvesso 100 5) | 16.0 | 18.0 | 21.0 | 11.0 | 18.0 |
| | Cyclohexanone | 16.0 | 18.0 | 21.0 | 11.0 | 18.0 |
| | | | | | | |
| | **Total** | 230.0 | 231.0 | 249.0 | 221.0 | 232.0 |
| Solid fractions | A Component | 36.06 | 36.06 | 36.06 | 36.06 | 36.06 |
| | B Component | 14.98 | 14.98 | 14.98 | 14.98 | 14.98 |
| | C Component | 9.08 | 8.85 | 9.05 | 8.93 | 8.90 |
| | Total A+B+C Solid Fraction | 60.11 | 59.89 | 60.08 | 59.96 | 59.93 |
| Solid fraction ratio | A/B/C | 60/25/15 | 60/25/15 | 60/25/15 | 60/25/15 | 60/25/15 |
| NCO/OH Functional group ratio | | 1/0.96 | 1/0.96 | 1/0.96 | 1/0.94 | 1/0.96 |

The superscripts attached substances in Tables 1 to 5 have the significance indicated below.
1) Desmodur BL3175: Trade name, produced by the Sumitomo Beyer Urethane Co., blocked isocyanate compound, effective NCO 11.2 mass%, solid fraction 75 mass%
2) Desmodur BL4265: Trade name, produced by the Sumitomo Beyer Urethane Co., blocked isocyanate compound, effective NCO 8.1 mass%, solid fraction 65 mass%
3) JR-602: Trade name, produced by the Teika Co., titanium dioxide
4) BYK-325: Produced by the Byk Chemie Co., surface controlling agent
5) Solvesso 100: Produced by the Exxon Chemical Co., aromatic petroleum naphtha
6) Vylon GK13CS: Trade name, produced by the Toyo Boseki Co., polyester resin, hydroxyl group value 20 mgKOH/g, number average molecular weight 7,000, solid fraction 50 mass%, glass transition temperature 15°C.

Furthermore, the evaluation of the properties of the paint films obtained with the paint compositions of this invention was carried out using the methods outlined below.

### (1) Workability-1

Test pieces which had been cut to a width of 5 cm were stuck and flexed through 180° at a room temperature of 20°C with nothing on the inside as 0T, with one sheet the same as the test piece on the inside as 1T or with two sheets the same as the test piece on the inside as 2T and with the paint film on the outside. Evaluation was carried out on the basis of a five point scale in respect of subsequent peeling with cellophane tape.

| | |
|---|---|
| 5: | No peeling at all |
| 4: | Less than 10% peeling |
| 3: | At least 10% but less than 25% peeling |
| 2: | At least 25% but less than 50% peeling |
| 1: | 50% or more peeling |

### (2) Workability-2

Sticking and flexing through 180° was carried out at a room temperature of 20°C in the same way as described in Workability 1. The assessment involved observing the end part with a 30X magnifying glass and the evaluation was made on the basis of a five point scale.

| | |
|---|---|
| 5: | No cracking at all |
| 4: | Less than 10% cracking |
| 3: | At least 10% but less than 25% cracking |
| 2: | At least 25% but less than 50% cracking |
| 1: | 50% or more cracking |

### (3) Pencil Hardness

The pencil hardness at which no damage was produced with a pencil scratch tester was obtained in accordance with JIS K 5600-5-4 (1999). "H" or above indicates a good paint film.

### (4) Solvent Resistance

The paint surface was wiped with de-greased cotton wool which had been soaked in xylene and the number of reciprocations required to expose the surface is shown. A score of >100 times indicates a good paint film.

### (5) Boiling Water Resistance

A test piece was immersed in boiling water for 2 hours in accordance with JIS K-5400 (1990) 8.20 and then cooled and left to stand for 2 hours at room temperature and any abnormalities of the paint film were observed and assessed on the basis of the criteria indicated below.
○: No abnormality of the paint film at all
Δ: Slight swelling of the paint film was observed
X: Distinct swelling of the paint film was observed

### (6) Oily Ink Staining Properties

An oily-ink was coated on the painted surface and left to stand for 48 hours at room temperature and then the oily ink which had been coated was wiped off with a soft cloth which had been soaked with xylene and then the sample was observed visually.
⊚: No stain could be seen
○: Slight stain could be seen
Δ: A fair stain remained
X: A dark stain remained

### (6) Carbon Staining Properties

A liquid dispersion (1 ml) of carbon black/water in the proportions 5/95 (ratio by weight) was placed on the paint surface and left to stand for 24 hours at constant room temperature of 20°C and then washed a number of times and the extent of any stain on the paint surface where the liquid dispersion had been stood was observed visually and evaluated on the basis of the criteria indicated below.
⊚: No stain could be seen
○: Slight stain could be seen
Δ: A fair stain remained
X: A dark stain remained

### (7) Acid Resistance

A 5 wt% sulfuric acid aqueous solution (2 ml) was placed as a spot on the test piece and left to stand for 24 hours at 20°C and then any abnormality of the paint film was assessed visually.
⊚: No abnormality
○: Slight change in the gloss
Δ: Slight swelling had occurred
X: Swelling had occurred

### (8) Alkali Resistance

A 5 wt% sodium hydroxide aqueous solution (2 ml) was placed as a spot on the test piece and left to stand for 24 hours at 20°C and then any abnormality of the paint film was assessed visually.
⊚: No abnormality
○: Slight change in the gloss
Δ: Slight swelling had occurred
X: Swelling had occurred

### (9) Paint Stability

The paint which had been produced was transferred into a container and sealed and then left to stand for 7 days at 20°C, after which a visual evaluation of the state of the paint was carried out.

The results obtained on evaluating the paint films are shown in Tables 12 to 17.

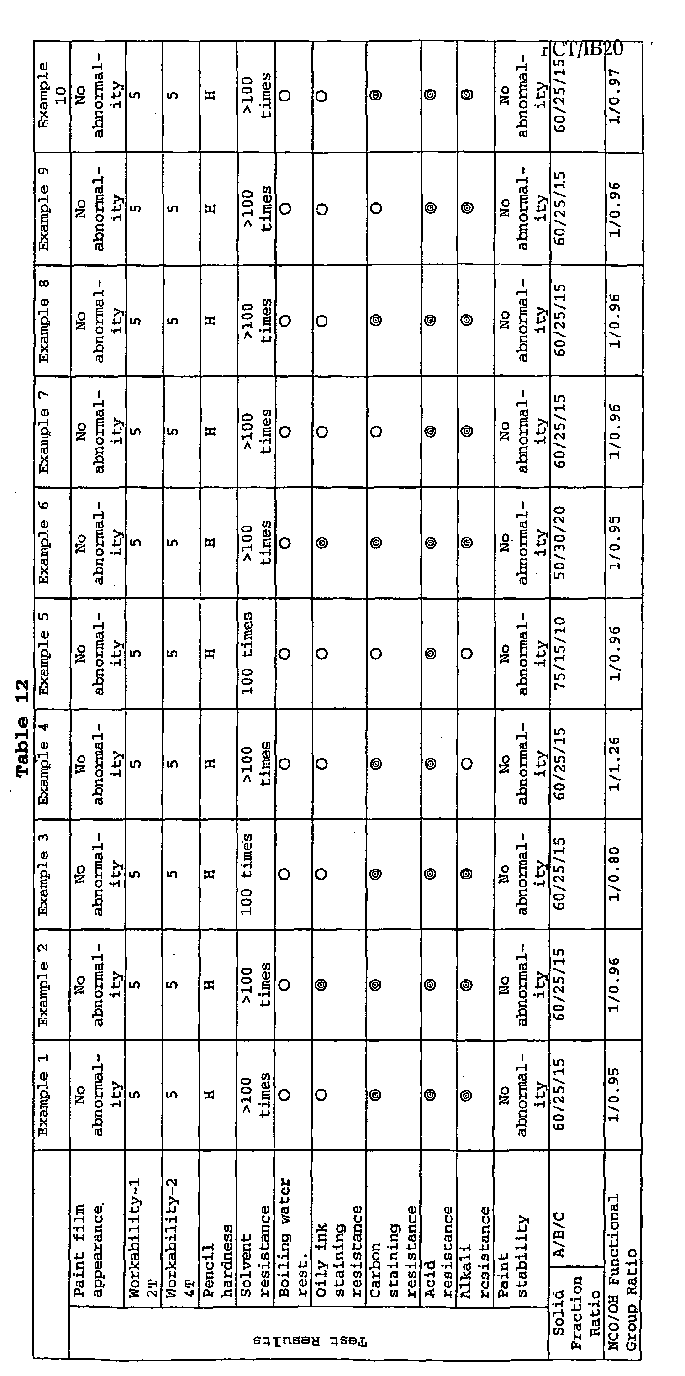

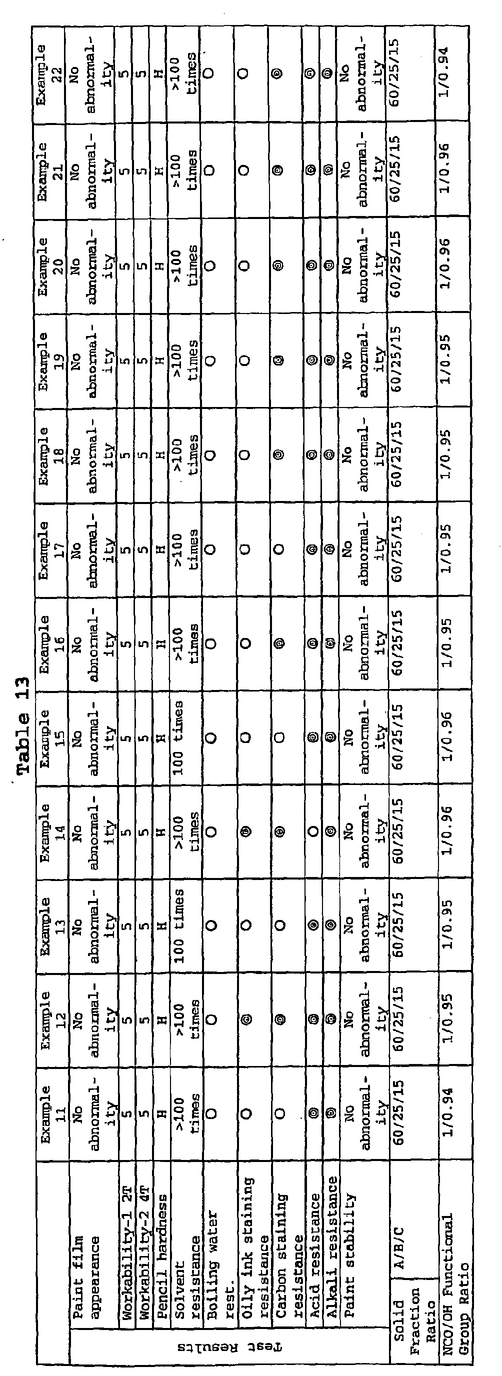

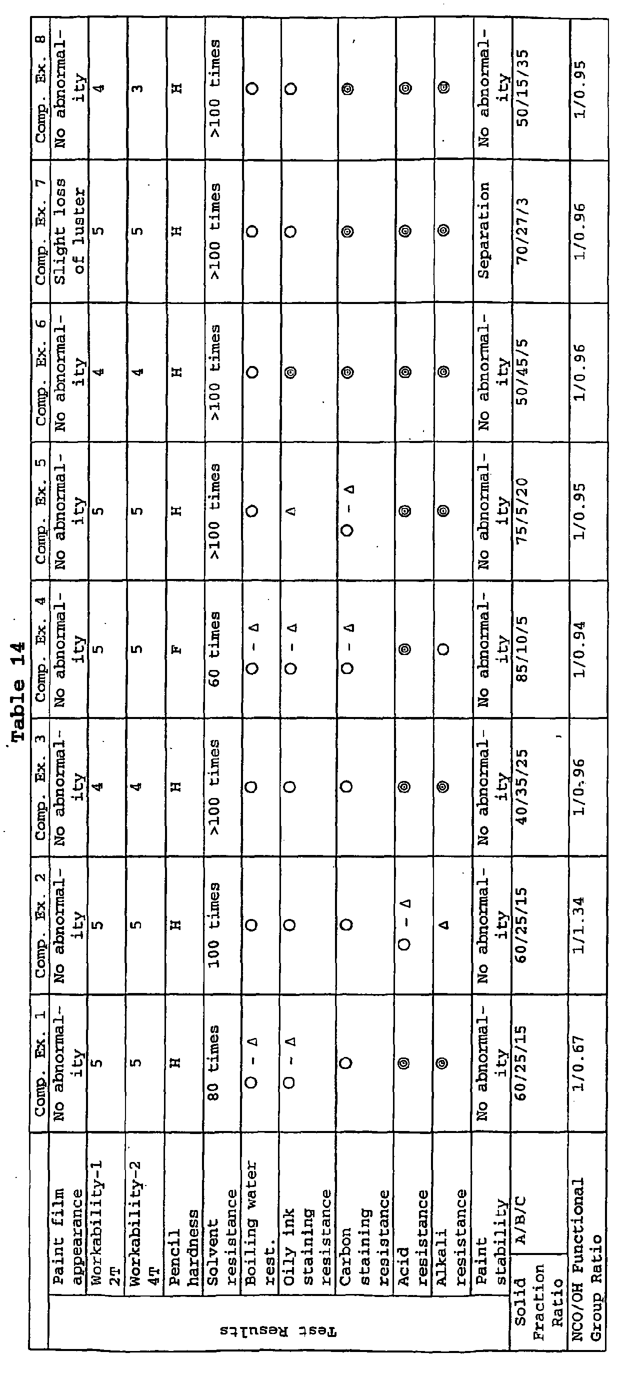

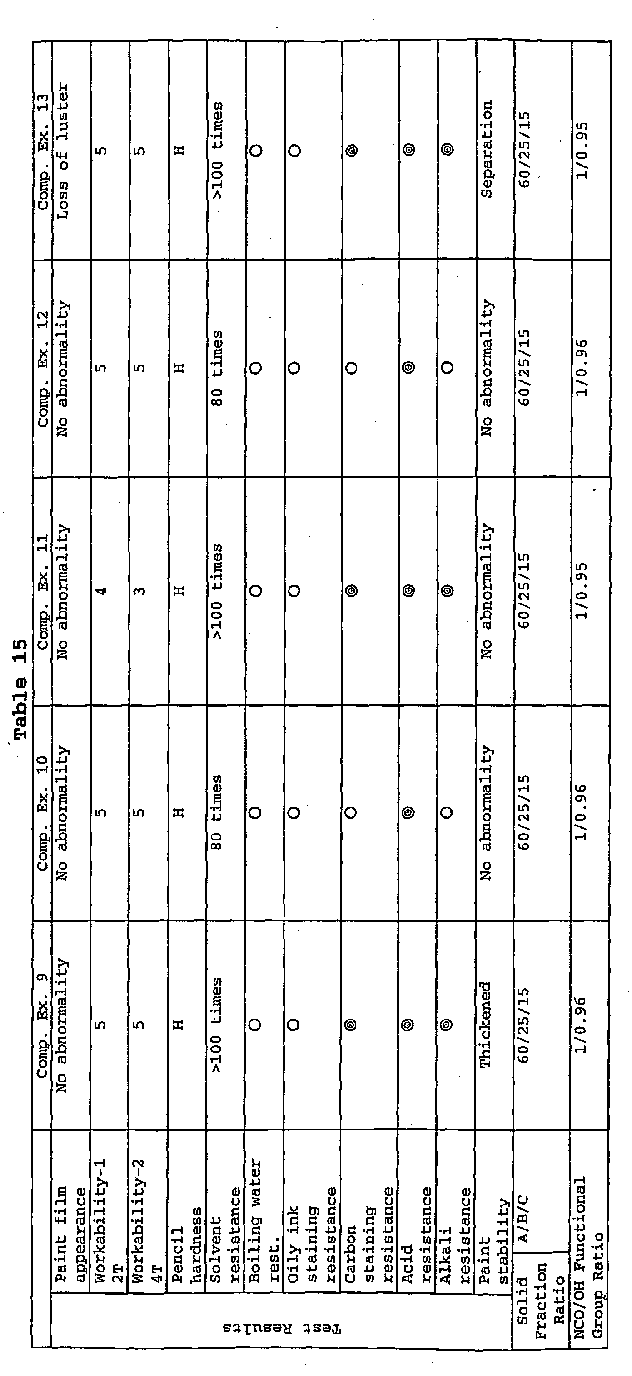

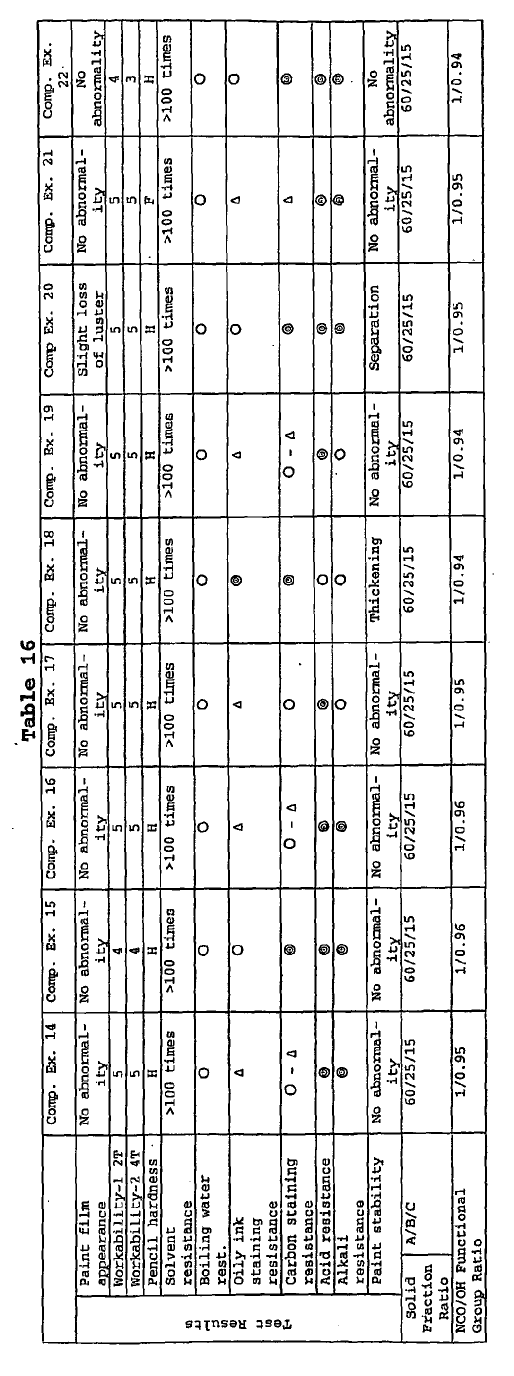

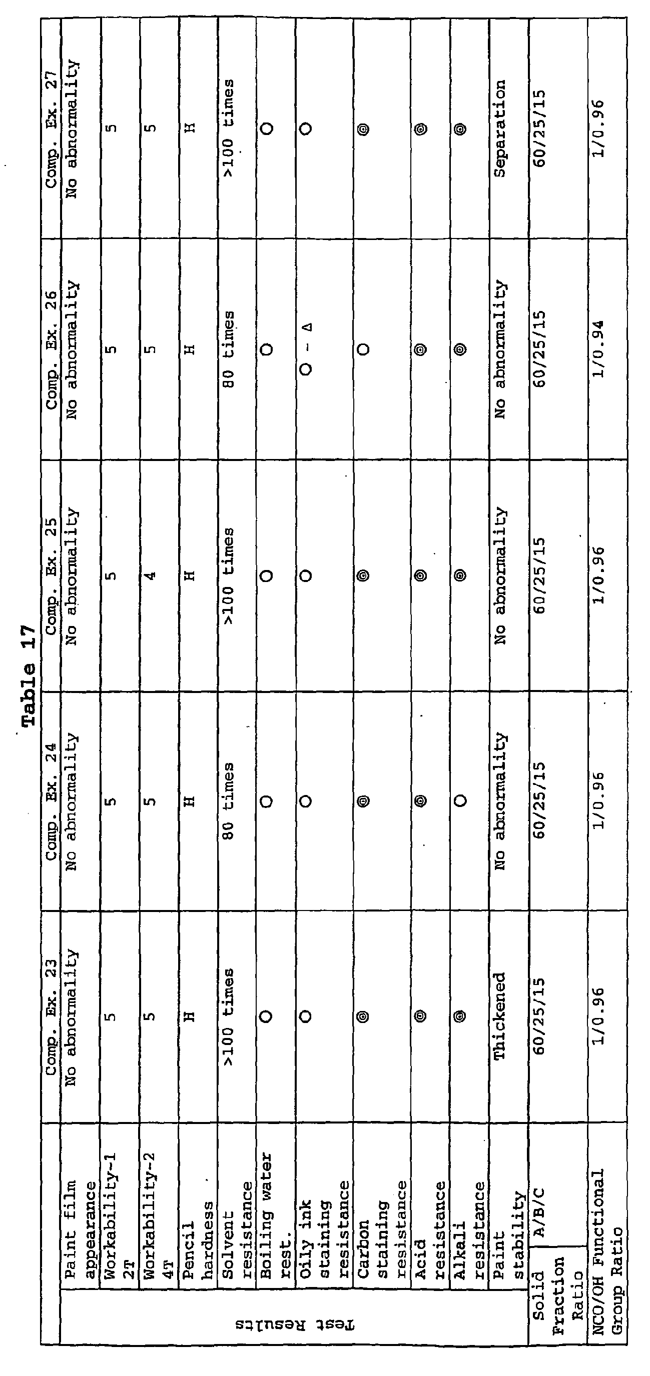

Examples 1 to 22 were good in respect of the appearance of the paint film, and the paint film properties of workability, pencil hardness, boiling water resistance, staining resistance and resistance to chemical attack, and furthermore the paint stability was also good. Comparative Example 1 is an example where the mol ratio of isocyanate groups and hydroxyl groups was greater than 1/0.7 and the solvent resistance was poor. Comparative Example 2 is an example where the mol ratio of isocyanate groups and hydroxyl groups was smaller than 1/1.3 and the resistance to chemical attack was poor. Comparative Example 3 is an example where the (A) component was below the lower limit and the workability was poor. Comparative Example 4 is an example where the (A) component exceeded the upper limit and the solvent resistance and the hardness of the paint film were poor. Comparative Example 5 is an example where the (B) component was below the lower limit and the staining resistance was poor. Comparative Example 6 is an example where the (B) component exceeded the upper limit and the workability was poor. Comparative Example 7 is an example where the (C) component was below the lower limit and the appearance of the paint film and the paint stability were poor. Comparative Example 8 is an example where the (C) component exceeded the upper limit and the workability was poor.

Comparative Example 9 is an example where the acid value of the (A) component (A-6) exceeded the upper limit and the stability of the paint was poor. Comparative Example 10 is an example where the hydroxyl group value of the (A) component (A-7) was below the lower limit and the solvent resistance was poor. Comparative Example 11 is an example where the hydroxyl group value of the (A) component (A-8) exceeded the upper limit and the workability was poor. Comparative Example 12 is an example where the number average molecular weight of the (A) component (A-9) was below the lower limit and the solvent resistance was poor. Comparative Example 13 is an example where the number average molecular weight of the (A) component exceeded the upper limit and the appearance of the paint film and the stability of the paint were poor.

Comparative Example 14 is an example where the hydroxyl group value of the (B) component (B-10) was below the lower limit and the staining resistance was poor. Comparative Example 15 is an example where the hydroxyl group value of the (B) component (B-11) exceeded the upper limit and the workability was poor. Comparative Example 16 is an example where no amine value was included in the (B) component (B-12) and the staining resistance was poor. Comparative Example 17 is an example where the amine value of the (B) component (B-13) was below the lower limit and the staining resistance was poor. Comparative Example 18 is an example where the amine value of the (B) component (B-14) exceeded the upper limit and the paint stability was poor. Comparative Example 19 is an example where the number average molecular weight of the (B) component (B-15) was below the lower limit and the staining resistance was poor. Comparative Example 20 is an example where the number average molecular weight of the (B) component (B-16) exceeded the upper limit and appearance of the paint film and the paint stability were poor. Example 21 is an example where the glass transition temperature of the (B) component (B-17) was below the lower limit and the paint film hardness and the staining resistance were poor. Comparative Example 22 is an example where the glass transition temperature of the (B) component (B-18) exceeded the upper limit and appearance of the workability was poor.

Comparative Example 23 is an example where the acid value of the (C) component (C-6) exceeded the upper limit and the stability of the paint was poor. Comparative Example 24 is an example where the hydroxyl group value of the (C) component (C-7) was below the lower limit and the solvent resistance was poor. Comparative Example 25 is an example where the hydroxyl group value of the (C) component (C-8) exceeded the upper limit and the workability was poor. Comparative Example 26 is an example where the number average molecular weight of the (C) component (C-9) was below the lower limit and the solvent resistance was poor. Comparative Example 27 is an example where the number average molecular weight of the (C) component (C-10) exceeded the upper limit and the stability of the paint was poor.
As indicated above, the paint compositions of this invention can form paint films which have good paint film properties, namely good paint film appearance, workability, pencil hardness, boiling water resistance, staining resistance and resistance to chemical attack, and the stability of the paint is also good.

## Claims

1. A top-coat paint composition for pre-coating purposes, **characterized in that** it includes (A) polyester resin of which the hydroxyl group value is from 10 to 35 mgKOH/g, the acid value is not more than 15 mgKOH/g and the number average molecular weight is from 2,000 to 6,000, (B) acrylic resin of which the hydroxyl group value is from 50 to 150 mgKOH/g, the amine value is from 10 to 50 mgKOH/g, the number average molecular weight is from 1,500 to 8,000 and the glass transition temperature is from 0 to 50°C, whereby the measurement of the glass transition temperature is carried out with the DSC (differential scanning calorimeter) method after removing the solvent component from the resin under reduced pressure, and (C) polyester resin of which the hydroxyl group value is from 50 to 150 mgKOH/g, the acid value is not more than 20 mgKOH/g and the number average molecular weight is from 1,000 to 4,000, and **in that** the proportions as the base resin of each component are from 45 to 85 mass% of the (A) component, from 10 to 40 mass% of the (B) component and from 5 to 30 mass% of the (C) component, and which also includes (D) blocked polyisocyanate as a crosslinking agent which reacts with hydroxyl groups and the ratio of the number on mol of isocyanate group of the (D) component blocked polyisocyanate compound as the crosslinking agent and the total number of mol of hydroxyl group in the (A), (B) and (C) components as the base resin is from 1/0.7 to 1/1.3.

## Patentansprüche

1. Decklackzusammensetzung für Vorbeschichtungszwecke, **dadurch gekennzeichnet, daß** sie (A) Polyesterharz mit einer Hydroxylzahl von 10 bis 35 mg KOH/g, einer Säurezahl von höchstens 15 mg KOH/g und einem zahlenmittleren Molekulargewicht von 2000 bis 6000, (B) Acrylharz mit einer Hydroxylzahl von 50 bis 150 mg KOH/g, einer Aminzahl von 10 bis 50 mg KOH/g, einem zahlenmittleren Molekulargewicht von 1500 bis 8000 und einer Glasübergangstemperatur von 0 bis 50°C, wobei die Messung der Glasübergangstemperatur nach Entfernung der Lösungsmittelkomponente aus dem Harz unter vermindertem Druck nach der DSC-Methode (DSC = Differential Scanning Calorimeter) erfolgt, (C) Polyesterharz mit einer Hydroxylzahl von 50 bis 150 mg KOH/g, einer Säurezahl von höchstens 20 mg KOH/g und einem zahlenmittleren Molekulargewicht von 1000 bis 4000 enthält und die Anteile als Grundharz jeder Komponente 45 bis 85 Massen-% der Komponente (A), 10 bis 40 Massen-% der Komponente (B) und 5 bis 30 Massen-% der Komponente (C) betragen, wobei die Decklackzusammensetzung auch (D) blockiertes Polyisocyanat als Vernetzer, der mit Hydroxylgruppen reagiert, enthält und das Verhältnis der Molzahl von Isocyanatgruppen der als Komponente (D) dienenden blockierten Polyisocyanatverbindung als Vernetzer und der Gesamtmolzahl von Hydroxylgruppen in den Komponenten (A), (B) und (C) als Grundharz 1/0,7 bis 1/1,3 beträgt.

## Revendications

1. Composition de peinture pour couche de finition destinée à des fins de pré-enduction, **caractérisée en ce qu'**elle comprend (A) une résine de polyester dont l'indice d'hydroxyle est de 10 à 35 mg de KOH/g, l'indice d'acide est inférieur ou égal à 15 mg de KOH/g et le poids moléculaire moyen en nombre est de 2 000 à 6 000, (B) une résine acrylique dont l'indice d'hydroxyle est de 50 à 150 mg de KOH/g, l'indice d'amine est de 10 à 50 mg de KOH/g, le poids moléculaire moyen en nombre est de 1 500 à 8 000 et la température de transition vitreuse est de 0 à 50°C, la mesure de la température de transition vitreuse étant réalisée avec le procédé DSC (calorimètre à balayage différentiel) après l'élimination du composant solvant de la résine sous pression réduite, et (C) une résine de polyester dont l'indice d'hydroxyle est de 50 à 150 mg de KOH/g, l'indice d'acide est inférieur ou égal à 20 mg de KOH/g et le poids moléculaire moyen en nombre est de 1 000 à 4 000, et **en ce que** les proportions en tant que résine de base de chaque composant sont de 45 à 85 % en masse du composant (A), de 10 à 40 % en masse du composant (B) et de 5 à 30 % en masse du composant (C), et qui comprend également (D) un polyisocyanate bloqué en tant qu'agent de réticulation qui réagit avec les groupes hydroxyle, le rapport entre le nombre de moles de groupe isocyanate du composant (D) composé polyisocyanate bloqué en tant qu'agent de réticulation et le nombre total de moles de groupe hydroxyle dans les composants (A), (B) et (C) en tant que résine de base étant de 1/0,7 à 1/1,3.
